## Europäisches Patentamt

(19) **European Patent Office**

**Office européen des brevets**

(11) Veröffentlichungsnummer: **0 005 819**
**B1**

(12) ## EUROPÄISCHE PATENTSCHRIFT

(45) Veröffentlichungstag der Patentschrift:
30.12.81

(51) Int. Cl.³: **H 02 B 1/08,** E 05 C 17/16

(21) Anmeldenummer: **79101639.7**

(22) Anmeldetag: **29.05.79**

(54) **Schaltschrank.**

(30) Priorität: **03.06.78 DE 7816709 U**

(43) Veröffentlichungstag der Anmeldung:
**12.12.79 Patentblatt 79/25**

(45) Bekanntmachung des Hinweises auf die Patenterteilung:
**30.12.81 Patentblatt 81/52**

(84) Benannte Vertragsstaaten:
**AT BE CH FR GB IT LU NL SE**

(56) Entgegenhaltungen:
**DE-A-7 816 709**
**FR-A-2 076 303**
**US-A-1 338 571**

(73) Patentinhaber: **Rittal-Werk Rudolf Loh GmbH & Co. KG,
Auf dem Stützelberg, D-6348 Herborn (DE)**

(72) Erfinder: **Lehr, Lothar, Dresseldorfer Strasse 16,
D-5909 Burbach-Oberdresseldorf (DE)**
Erfinder: **Bovermann, Klaus Dieter, Memeler Strasse 8,
D-6348 Herborn (DE)**

(74) Vertreter: **Vogel, Georg, Auenweg 14,
D-7141 Schwieberdingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Schaltschrank

Die Erfindung betrifft einen Schaltschrank, dessen offene Vorderseite mittels einer am Schrankkorpus angelenkten Schranktür verschliessbar ist, bei dem die Schranktür auf der Innenseite entlang ihrer Randbereiche mittels als Halteleisten oder Haltelappen ausgebildeten abstehenden Versteifungsleisten verstärkt ist.

Wie das DE-GM 76 33 204 zeigt, werden bei Schaltschränken die Metalltüren mittels Versteifungsleisten in ihren Randbereichen verstärkt. Die Versteifungsleisten stehen dabei als Halteleisten oder Haltelappen an der Innenseite der Schranktür ab und werden zur Befestigung von Profilschienen mit elektrischen Bauteilen oder dgl. ausgenützt.

Bei den bekannten Schaltschränken sind die Schranktüren am Schrankkorpus angelenkt. Die verwendeten Scharniere erlauben das Aushängen der Schranktür, so dass diese bei der Montage und der Verdrahtung der im Schaltschrank untergebrachten Geräte und Bauteile abgenommen werden kann. Die Schranktür behindert dann den Zugang zu den im Schaltschrank untergebrachten Geräten und Bauteilen nicht mehr.

Wenn aber die Halteleisten oder Haltelappen der Schranktür mit zur Befestigung von Geräten und Bauteilen ausgenützt werden, kann die Schranktür nicht mehr ohne weiteres von dem Schrankkorpus abgenommen werden, da die so an der Schranktür befestigten Geräte und Bauteile in die Verdrahtung des Schaltschrankes mit einbezogen werden müssen.

Aus der US-PS 13 38 571 ist eine Arretiervorrichtung für eine an einem Türrahmen angeschlagene Tür bekannt, die einen Scherenarm umfasst, der an einem Befestigungswinkel mit horizontaler Lasche schwenkbar angebracht ist. Am Türrahmen ist eine Rastkugel befestigt, die mit einem zylindrischen Führungsabschnitt in einem Führungsschlitz des Scherenarmes längsverstellbar ist. Der Führungsschlitz wird am freien Ende des Scherenarmes von einer Rastfeder abgedeckt, die am Scherenarm befestigt ist und in der Öffnungsstellung der Tür die Rastkugel rastend aufnimmt.

Eine derartige Arretiervorrichtung ist für eine Schranktür eines Schaltschrankes nicht geeignet, da der Befestigungswinkel an dem Türblatt, das hier aus einem Blechzuschnitt gebogen wird, nicht angeschraubt werden kann, da die Schraubverbindungen auf der Sichtseite der Schranktür einsehbar wären. Ausserdem erfordert die Rastfeder beim Einstellen und beim Aufheben der Öffnungsstellung der Tür erhebliche Rastkräfte und die Arretiervorrichtung ist an einem fertigen Schaltschrank mit lackierten Teilen nicht einfach nachrüstbar.

Es ist Aufgabe der Erfindung, einen Schaltschrank der eingangs erwähnten Art so zu verbessern, dass die Schranktür leicht in der Montagestellung so arretiert werden kann, dass sie den Zugang zu den Geräten und Bauteilen im Schrankkorpus nicht beeinträchtigt, die Verdrahtung an der Schranktür festgelegten Geräte und Bauteile aber ohne Einschränkung zulässt, wobei die dafür erforderlichen Teile auch leicht an einem fertigen Schaltschrank nachgerüstet werden können.

Diese Aufgabe wird nach der Erfindung dadurch gelöst, dass zumindest in einem Eckbereich der Anlenkseite der Schranktür an einer Halteleiste oder einem Haltelappen ein Lagerbock mit einer horizontal ausgerichteten Lagerlasche angebracht ist, dass an dieser Lagerlasche ein Scherenarm mit einem längsgerichteten Führungsschlitz angelenkt ist, der am freien Ende des Scherenarmes in eine erweiterte Arretierungsaufnahme übergeht, dass am Schrankkorpus ein vertikal ausgerichteter, den Führungsschlitz des Scherenarmes durchgreifender Führungsbolzen festgelegt ist und dass der Scherenarm mittels des Führungsschlitzes an einem oberen, im Durchmesser darauf angepassten Führungsabschnitt an dem Führungsbolzen verstellbar und mittels eines im Durchmesser an die Arretierungsaufnahme angepassten unteren Arretierungsabschnittes an dem Führungsbolzen arretierbar ist. Mit dieser einfachen, an dem Metall-Schrankkorpus und der Metall-Schranktür festlegbaren Arretierungsvorrichtung kann die Schranktür in der Offenstellung eindeutig arretiert werden, so dass die Montage und Verdrahtung dadurch in keiner Weise mehr beeinträchtigt wird. Die Schranktür braucht nicht mehr vom Schrankkorpus gelöst zu werden. Die Teile der Arretierungsvorrichtung können unter Ausnützung der Halteleisten oder Haltelappen an der Schranktür und dem Schrankkorpus auch nachträglich angebracht werden, wobei lediglich am Schrankkorpus eine Bohrung zur Befestigung des Führungsbolzens anzubringen ist.

Die Festlegung des Lagerbockes an der Schranktür ist nach einer Ausgestaltung so ausgeführt, dass der Lagerbock U-förmig ausgebildet ist und dass sich dessen Seitenschenkel mittels nach aussen abgebogener Endteile an der Innenseite der Schranktür abstützen. Mit dieser zusätzlichen Abstützung werden die Kräfte der Lagerstelle grossflächig auf die Schranktür übertragen.

Die Verbindung zwischen dem Lagerbock und der Schranktür kann so erfolgen, dass der Lagerbock mittels eines seiner Seitenschenkel an der senkrecht zur Innenseite der Schranktür stehenden Halteleiste befestigt ist oder dass der Lagerbock mittels seines Mittelsteges an einem an der Halteleiste parallel zur Innenseite der Schranktür abgewinkelten Haltelappen befestigt ist. In jedem Fall genügt eine Schraubverbindung, da sowohl die Seitenschenkel, als auch der Mittelsteg des Lagerbockes mit Befestigungsdurchbrüchen versehen sein können.

Die Lagerlasche für den Scherenarm ist vorzugsweise an dem Mittelsteg des Lagerbockes hochgebogen.

Damit die Wirkverbindung zwischen dem Scherenarm und dem Führungsbolzen erhalten bleibt, ist nach einer weiteren Ausgestaltung vorgesehen, dass der Führungsbolzen an seiner unteren freien Seite mittels eines Anschlagbundes erweitert ist, dessen Durchmesser grösser ist als der Durchmesser der Arretierungsaufnahme des Scherenarmes.

Für die Festlegung des Führungsbolzens am Schrankkorpus ist gemäss einer Weiterbildung vorgesehen, dass der Führungsbolzen mittels seines als Gewindeteil ausgebildeten oberen Endes in eine Gewindebohrung eines Befestigungswinkels einschraubbar ist und dass der Befestigungswinkel mittels einer Schraube an dem die Vorderseite des Schaltschrankes begrenzenden vertikalen Randes festgelegt ist. Damit braucht die Deckwand des Schrankkorpus nicht durchbrochen zu werden.

Die Drehlagerung des Scherenarmes an der Lagerlasche des Lagerbockes übernehmen eine Schraube und eine Mutter. Damit in der Öffnungsstellung der Schranktür der Scherenarm mit seiner Arretierungsaufnahme an dem Arretierungsabschnitt des Führungsbolzens leicht arretiert werden kann, sieht eine weitere Ausgestaltung vor, dass der Führungsabschnitt des Führungsbolzens mittels eines sich konisch erweiternden Zwischenabschnittes in den Arretierungsabschnitt übergeht. Der Scherenarm kann dann in der Öffnungsstellung leicht abgesenkt und mittels des Arretierungsabschnittes des Führungsbolzens arretiert werden.

Damit die Auslenkung des freien Endes des Scherenarmes auf ein Minimum beschränkt bleibt, sieht eine weitere Ausgestaltung vor, dass die axiale Länge des Führungsabschnittes und des Arretierungsabschnittes an dem Führungsbolzen mindestens gleich der Stärke des Scherenarmes ist. Der Scherenarm wird beim Öffnen der Schranktür dann immer noch eindeutig an dem Führungsabschnitt des Führungsbolzens geführt und in der Arretierungsstellung ebenso eindeutig von dem Arretierungsabschnitt des Führungsbolzens gehalten.

Die Anbringung der Arretierungsvorrichtung ist vorzugsweise so gelöst, dass der Lagerbock und der Führungsbolzen so an der Schranktür oder dem Schrankkorpus befestigt sind, dass der Scherenarm innerhalb der durch den Schliessrand begrenzten Öffnung des Schaltschrankes liegt. Die Arretierungsvorrichtung beeinträchtigt dann das Schliessen der Schranktür in keiner Weise.

Da die Auslenkung des Scherenarmes in die Arretierungsstellung gelegentlich manuell unterstützt werden muss, sieht aus Gründen der Bedienungsvereinfachung eine weitere Ausgestaltung vor, dass der Lagerbock in dem oberen Eckbereich der Scharnierseite der Schranktür angebracht ist und dass der Führungsbolzen in einem vorgegebenen Abstand von der Scharnierseite des Schrankkorpus an dem oberen Rand desselben in den Innenraum des Schrankkorpus vorstehend angebracht ist.

Um einen ausreichend grossen Öffnungswinkel für die Schranktür zu erhalten, ist vorgesehen, dass die Schranktür mittels Scharnieren mit einem Öffnungswinkel von mehr als 120° an dem Schrankkorpus angeschlagen ist. Die offene Schrankvorderseite ist dann bei geöffneter Schranktür ungehindert zugänglich.

Die Erfindung wird anhand eines in den Zeichnungen dargestellten Ausführungsbeispiels näher erläutert. Es zeigt:

Figur 1 die Teile der Arretierungsvorrichtung zur Festlegung der Öffnungsstellung einer Schranktür und

Figur 2 die an einem Schaltschrank angebrachte Arretierungsvorrichtung nach Figur 1 in der arretierten Öffnungsstellung der Schranktür.

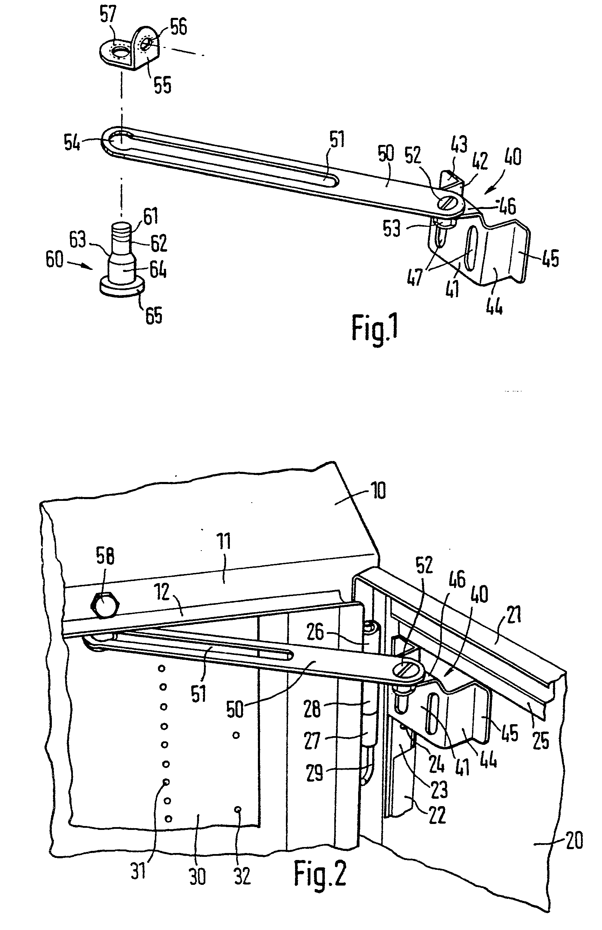

Wie Figur 1 zeigt, umfasst die Arretierungsvorrichtung zur Arretierung der Schranktür eines Schaltschrankes in ihrer Öffnungsstellung einen Lagerbock 40, einen Scherenarm 50 und einen Führungsbolzen 60. Der U-förmige Lagerbock 40 weist an dem Mittelsteg 41 eine hochgebogene Lagerlasche 46 auf, an der mittels der Schraube 52 und der Mutter 53 der Scherenarm 50 drehbar festgelegt ist.

Die Seitenschenkel 42 und 44 des Lagerbockes 40 sind mit nach aussen abgebogenen Endteilen 43 und 45 versehen. Die Schranktür 20 mit dem umgebogenen Rand 21 ist, wie Figur 2 zeigt, in den Randbereichen durch Versteifungsleisten oder dgl. verstärkt. Diese Versteifungsleisten besitzen senkrecht abstehende Halteleisten 22, die voll oder nur zum Teil als parallel zur Innenseite der Schranktür 20 verlaufende Haltelappen 23 bzw. 25 abgebogen sind. An diesen Halteleisten 22 bzw. Haltelappen 23 kann der Lagerbock 40 befestigt werden und zwar über seinen Seitenschenkel 42 oder den Mittelsteg 41, der ebenso wie der Seitenschenkel 42 mit Befestigungsdurchbrüchen 47 versehen sein kann. Die Halteleisten 22 bzw. die Haltelappen 23 können mit Bohrungen 24 versehen sein, so dass der Lagerbock 40 angeschraubt werden kann. Die Endteile 43 und 45 der Seitenschenkel 42 und 44 des Lagerbockes 40 stützen sich dabei auf der Innenseite der Schranktür 20 ab, so dass die Kraftübertragung von der Gelenkstelle des Scherenarmes 50 zur Schranktür 20 grossflächig erfolgt.

Der Scherenarm 50 weist einen längsgerichteten Führungsschlitz 51 auf, der am freien Ende des Scherenarmes 50 in eine im Durchmesser vergrösserte Arretierungsaufnahme 54 übergeht. In den Führungsschlitz 51 wird der Führungsbolzen 60 eingeführt, der am unteren Ende einen Anschlagbund 65 aufweist, dessen Durchmesser grösser ist als der Durchmesser der Arretierungsaufnahme 54 des Scherenarmes 50. Der Scherenarm 50 kann daher auch in der Arretierungsstellung nicht von dem Führungsbolzen 60 gleiten. Der Führungsbolzen 60 ist mit dem oberen, als Gewindeteil 61 ausgebildeten Ende in eine Gewindebohrung 57 in dem einen Schenkel eines Befestigungswinkels 55 eingeschraubt. Der Befestigungswinkel 55 wird mittels der Schraube 58, die in die Gewindebohrung 56 im anderen Schenkel des Befestigungswinkels eingeschraubt wird, an dem vertikalen Rand 11 des Schrankkorpus 10 befestigt.

Wie Figur 2 zeigt, ragt der Führungsbolzen 60 über den oberen vertikalen Rand 11 des Schrankkorpus 10 in die Öffnung hinein. Der Lagerbock 40 ist so an der Halteleiste 22 bzw. dem Halteappen 23 befestigt, dass der Scherenarm 50 im Bereich der Öffnung des Schrankkorpus 10 liegt und damit das Schliessen der Schranktür 20 nicht beeinträchtigt.

Die Schranktür 20 trägt eine Scharnieröse 28, die zwischen den Scharnierösen 26 und 27 des Schrankkorpus 10 liegt. Der Scharnierstift 29 verbindet die Scharnierösen 26 bis 28 gelenkig, so dass die Schranktür 20 drehbar am Schrankkorpus 10 angebracht ist. Die Schranktür 20 wird mittels zwei oder mehr Scharnieren dieser Art am Schrankkorpus 10 angelenkt.

Der Lagerbock 40 ist vorzugsweise im Bereich der oberen Ecke der Scharnierseite der Schranktür 20 festgelegt und der Führungsbolzen 60 ist in einem vorgegebenen Abstand von der Scharnierseite an dem oberen Rand 11 des Schrankkorpus 10 befestigt. Der Öffnungswinkel der Scharniere ist vorzugsweise grösser als 120° und die Länge des Scherenarmes 50 ist so abgestimmt, dass er in Verbindung mit den Befestigungsstellen des Lagerbockes 40 an der Schranktür 20 und des Führungsbolzens 60 am Schrankkorpus 10 diesen grossen Öffnungswinkel der Schranktür 20 zulässt.

Beim Öffnen der Schranktür 20 ist der Führungsbolzen 60 mit dem Führungsabschnitt 62 in dem Führungsschlitz 51 des Scherenarmes 50 geführt. Ist die Schranktür 20 voll geöffnet, dann gelangt der Führungsbolzen 60 in die Arretierungsaufnahme 54 des Scherenarmes 50. Der Scherenarm 50 kann durch sein Eigengewicht oder durch manuelle Absenkung auf den Arretierungsabschnitt 64 des Führungsbolzens 60 gelangen. Der sich konisch vergrössernde Zwischenabschnitt 63 des Führungsbolzens 60 erleichtert diesen Übergang. Der Arretierungsabschnitt 64 des Führungsbolzens 60 ist im Durchmesser auf den Durchmesser der Arretierungsaufnahme 54 des Scherenarmes 50 angepasst. In dieser Arretierungsstellung verhindert der Scherenarm 50 das Schliessen der Schranktür 20, da der Arretierungsabschnitt 64 des Führungsbolzens 60 nicht in den Führungsschlitz 51 des Scherenarmes 50 eingeführt werden kann. Die axiale Länge des Führungsabschnittes 62 und des Arretierungsabschnittes 64 ist vorzugsweise gleich oder grösser als die Stärke des Scherenarmes 50, um eine eindeutige Verstellung des Scherenarmes 50 am Führungsabschnitt 62 und eine ebenso eindeutige Arretierung am Arretierungsabschnitt 64 des Führungsbolzens 60 zu erhalten.

In der Figur 2 ist die im Bereich der Rückwand des Schrankkorpus 10 angeordnete Montageplatte 30 zu erkennen, die mit Lochreihen 31 und 32 zur Befestigung von Profilschienen, Kabelkanälen oder dgl. versehen ist.

Hat der Schrankkorpus 10 eine an dem Rand 11 der Vorderseite vorstehende Verschlussleiste, dann kann nach einer weiteren Ausgestaltung der Führungsbolzen für den Scherenarm vor dem Rand und auf der Aussenseite der Verschlussleiste angeordnet sein. Dabei kann der Führungsbolzen an dem Rand oder dem horizontalen Schenkel der Verschlussleiste befestigt werden. Diese Auslegung hat den Vorteil, dass der Scherenarm nicht in die Öffnung des Schaltschrankes eingeführt wird, sondern zwischen der Verschlussleiste und dem Rand der Schranktür bewegt wird.

**Ansprüche**

1. Schaltschrank, dessen offene Vorderseite mittels einer am Schrankkorpus (10) angelenkten Schranktür (20) verschliessbar ist, bei dem die Schranktür (20) auf der Innenseite entlang ihrer Randbereiche mittels als Halteleisten (22) oder Halteappen (23) ausgebildeten abstehenden Versteifungsleisten verstärkt ist, dadurch gekennzeichnet, dass zumindest in einem Eckbereich der Anlenkseite der Schranktür (20) an einer Halteleiste (22) oder einem Halteappen (23) ein Lagerbock (40) mit einer horizontal ausgerichteten Lagerlasche (46) angebracht ist, dass an dieser Lagerlasche (46) ein Scherenarm (50) mit einem längsgerichteten Führungsschlitz (51) angelenkt ist, der am freien Ende des Scherenarmes (50) in eine erweiterte Arretierungsaufnahme (54) übergeht, dass am Schrankkorpus (10) ein vertikal ausgerichteter, den Führungsschlitz (51) des Scherenarmes (50) durchgreifender Führungsbolzen (60) festgelegt ist und dass der Scherenarm (50) mittels des Führungsschlitzes (51) an einem oberen, im Durchmesser darauf angepassten Führungsabschnitt (62) an dem Führungsbolzen (60) verstellbar und mittels eines im Durchmesser an die Arretierungsaufnahme (54) angepassten unteren Arretierungsabschnittes (64) an dem Führungsbolzen (60) arretierbar ist.

2. Schaltschrank nach Anspruch 1, dadurch gekennzeichnet, dass der Lagerbock (40) U-förmig ausgebildet ist und dass sich dessen Seitenschenkel (42, 44) mittels nach aussen abgebogener Endteile (43, 45) an der Innenseite der Schranktür (20) abstützen.

3. Schaltschrank nach Anspruch 2, dadurch gekennzeichnet, dass der Lagerbock (40) mittels eines seiner Seitenschenkel (z.B. 42) an der senkrecht zur Innenseite der Schranktür (20) stehenden Halteleiste (22) befestigt ist.

4. Schaltschrank nach Anspruch 2, dadurch gekennzeichnet, dass der Lagerbock (40) mittels seines Mittelsteges (41) an einem an der Halteleiste (22) parallel zur Innenseite der Schranktür (20) abgewinkelten Halteappen (23) befestigt ist.

5. Schaltschrank nach Anspruch 3 oder 4, dadurch gekennzeichnet,
dass an dem Mittelsteg (41) des Lagerbockes (40) eine Lagerlasche (46) hochgebogen ist.

6. Schaltschrank nach einem der Ansprüche 1 bis 5,
dadurch gekennzeichnet,
dass der Führungsbolzen (60) an seiner unteren freien Seite mittels eines Anschlagbundes (65) erweitert ist, dessen Durchmesser grösser ist als der Durchmesser der Arretierungsaufnahme (54) des Scherenarmes (50).

7. Schaltschrank nach einem der Ansprüche 1 bis 6,
dadurch gekennzeichnet,
dass der Führungsbolzen (60) mittels seines als Gewindeteil (61) ausgebildeten oberen Endes in eine Gewindebohrung (57) eines Befestigungswinkels (55) einschraubbar ist und dass der Befestigungswinkel (55) mittels einer Schraube (58) an dem die Vorderseite des Schaltschrankes begrenzenden vertikalen Randes (11) festgelegt ist.

8. Schaltschrank nach einem der Ansprüche 1 bis 7,
dadurch gekennzeichnet,
dass der Scherenarm (50) mittels eines aus Schraube (52) und Mutter (53) gebildeten Gelenkes an der Lagerlasche (46) des Lagerbockes (40) drehbar angebracht ist.

9. Schaltschrank nach einem der Ansprüche 1 bis 8,
dadurch gekennzeichnet,
dass der Führungsabschnitt (62) des Führungsbolzens (60) mittels eines sich konisch erweiternden Zwischenabschnittes (63) in den Arretierungsabschnitt (64) übergeht.

10. Schaltschrank nach einem der Ansprüche 1 bis 9,
dadurch gekennzeichnet,
dass die axiale Länge des Führungsabschnittes (62) und des Arretierungsabschnittes (64) an dem Führungsbolzen (60) mindestens gleich der Stärke des Scherenarmes (50) ist.

11. Schaltschrank nach einem der Ansprüche 1 bis 10,
dadurch gekennzeichnet,
dass der Lagerbock (40) und der Führungsbolzen (60) so an der Schranktür (20) oder dem Schrankkorpus (10) befestigt sind, dass der Scherenarm (50) innerhalb der durch den Schliessrand (12) begrenzten Öffnung des Schaltschrankes liegt.

12. Schaltschrank nach einem der Ansprüche 1 bis 11,
dadurch gekennzeichnet,
dass der Lagerbock (40) in dem oberen Eckbereich der Scharnierseite der Schranktür (20) angebracht ist und dass der Führungsbolzen (60) in einem vorgegebenen Abstand von der Scharnierseite des Schrankkorpus (10) an dem oberen Rand (11, Schliessrand 12) desselben in den Innenraum des Schrankkorpus (10) vorstehend angebracht ist.

13. Schaltschrank nach einem der Ansprüche 1 bis 12,
dadurch gekennzeichnet,
dass die Schranktür (20) mittels Scharnieren (26 bis 29) mit einem Öffnungswinkel von mehr als 120° an dem Schrankkorpus (10) angeschlagen ist.

14. Schaltschrank nach Anspruch 1,
dadurch gekennzeichnet,
dass bei einem Schrankkorpus (10) mit an dem Rand (11) der Vorderseite vorstehender Verschlussleiste der Führungsbolzen (60) für den Scherenarm (50) vor dem Rand (11) und auf der Aussenseite der Verschlussleiste angeordnet und an dem Rand (11) oder dem horizontalen Schenkel der Dichtleiste angebracht ist.

**Revendications**

1. Armoire de distribution dont la face antérieure ouverte peut être obturée par une porte (20) articulée sur le corps (10) de cette armoire, le rebord de cette porte (20) étant renforcé intérieurement par des barrettes saillantes, ayant la conformation de barrettes (22) ou de languettes (23) d'arrêt, armoire caractérisée en ce que:
un support d'articulation (40) comportant une patte d'articulation (46) orientée horizontalement est montée dans un angle du côté d'articulation de la porte (20) sur une barrette (22) ou une languette (23) d'arrêt;
sur la patte (46) est articulée une branche de ciseaux (50) comportant une boutonnière (51) qui est orientée longitudinalement et qui se raccorde, à l'extrémité libre de cette branche (50), avec un logement d'immobilisation (54) plus large;
une broche-guide (60) orientée verticalement et engagée dans la boutonnière (51) de la branche de ciseaux (50) est fixée au corps (10) de l'armoire et cette branche (50) peut se déplacer, grâce à cette boutonnière (51), sur une partie supérieure (62) de guidage de la broche (60), dont le diamètre correspond à celui de ladite boutonnière et peut être immobilisée par une partie inférieure (64) d'arrêt de la broche (60), dont le diamètre correspond à celui du logement d'immobilisation (54).

2. Armoire de distribution selon la revendication 1,
caractérisée en ce que
le support d'articulation (40) est en forme de U et ses branches latérales (42, 44) s'appliquent contre la face intérieure de la porte (20) au moyen de parties extrêmes (43, 45) repliées vers l'extérieur.

3. Armoire de distribution selon la revendication 2,
caractérisée en ce que
le support d'articulation (40) est fixé par l'une de ses branches latérales (par exemple 42) à la barrette d'arrêt (22) qui est perpendiculaire à la face intérieure de la porte (20).

4. Armoire de distribution selon la revendication 2,
caractérisée en ce que
le support d'articulation (40) est fixé par sa traverse médiane (41) à une languette d'arrêt (23) repliée parallèlement à la face intérieure de la porte (20).

5. Armoire de distribution selon l'une des revendications 3 et 4,
caractérisée en ce que
la traverse médiane (41) du support d'articulation (40) porte une patte d'articulation (46) qui est repliée.

6. Armoire de distribution selon l'une quelconque des revendications précédentes,
caractérisée en ce que
la broche-guide (60) est élargie à son extrémité inférieure libre en formant une collerette de butée (65 dont le diamètre est plus grand que celui du logement d'immobilisation (54) de la branche de ciseaux (50).

7. Armoire de distribution selon l'une quelconque des revendications précédentes,
caractérisée en ce que
la broche-guide (60) peut être vissée par sa partie supérieure filetée (61) dans un taraudage (57) d'une équerre de fixation (55), cette équerre (55) étant fixée par une vis (58) au rebord vertical (11) qui délimite la face extérieure de l'armoire.

8. Armoire de distribution selon l'une quelconque des revendications précédentes,
caractérisée en ce que
la branche de ciseaux (50) est montée sur la patte (46) du support (40) au moyen d'une articulation composée d'une vis (52) et d'un écrou (53).

9. Armoire de distribution selon l'une quelconque des revendications précédentes,
caractérisée en ce que
la partie de guidage (62) de la broche-guide (60) est raccordée à la partie d'arrêt (64) par une partie intermédiaire (63) qui s'élargit en cône.

10. Armoire de distribution selon l'une quelconque des revendications précédentes,
caractérisée en ce que
la longueur axiale de la partie de guidage (62) et celle de la partie d'arrêt (64) de la broche-guide (60) sont au moins égales à l'épaisseur de la branche de ciseaux (50).

11. Armoire de distribution selon l'une quelconque des revendications précédentes,
caractérisée en ce que
le support d'articulation (40) et la broche-guide (60) sont fixés à la porte (20) ou au corps (10) de cette armoire, de façon que la branche de ciseaux (50) se trouve à l'intérieur de l'ouverture de l'armoire délimitée par le rebord de fermeture (12).

12. Armoire de distribution selon l'une quelconque des revendications précédentes,
caractérisée en ce que
le support d'articulation (40) est monté dans l'angle supérieur à côté des charnières de la porte (20), la broche-guide (60) étant montée à une distance prédéterminée du côté proche des charnières du corps (10) de l'armoire, sur le rebord supérieur (11, rebord de fermeture 12) de ce corps et faisant saillie dans la cavité de ce corps (10).

13. Armoire de distribution selon l'une quelconque des revendications précédentes,
caractérisée en ce que
la porte (20) est montée sur le corps (10) de cette armoire au moyen de charnières (26—28) dont l'angle d'ouverture est supérieur à 120°.

14. Armoire de distribution selon la revendication 1,
caractérisée en ce que,
si le corps (10) de cette armoire comporte une barrette de fermeture faisant saillie du rebord (11) de la face antérieure, la broche-guide (60) de la branche de ciseaux (50) est disposée en avant de ce rebord (11) et sur le côté extérieur de cette barrette de fermeture et est montée sur ledit rebord (11) ou sur l'aile horizontale de ladite barrette.

## Claims

1. Switch cabinet whose open front side is capable of being closed by means of a cabinet door (20) hinged to the corpus (10) of the cabinet, with said cabinet door (20) being reinforced on the inside along its horizontal and vertical edges by means of projecting reinforcing strips designed as holding strips (22) and holding flaps (23),
characterized in
that at least in one corner on the hinge side of said cabinet door (20) a bearing block (40) with a horizontally aligned bearing plate (46) is attached to one of said holding strips (22) or to one of said holding flaps (23),
that to said bearing plate (46) there is hinged a scissor-arm type lever (50) having therein a longitudinally directed guide slot (51) which, at the free end of said scissor-arm type lever (50), ends up in an extended catch receptacle (54),
that on said cabinet corpus (10) there is secured a vertically aligned guide bolt (60) extending through said guide slot (51) in said scissor-arm type lever (50), and
that said scissor-arm type lever (50), by way of said guide slot (51), is adjustable on said guide bolt (60) within an upper guiding portion (62) of corresponding diameter, and capable of being locked in position on said guide bolt (60) by means of a lower arresting portion (64) adapted in its diameter to that of said catch receptacle (54).

2. A switch cabinet as claimed in claim 1,
characterized in
that said bearing block (40) is of U-shaped design, and that the side legs thereof (42, 44), by means of outwardly bent off end members (43, 45), about on the interior side of said cabinet door (20).

3. A switch cabinet as claimed in claim 2,
characterized in
that said bearing block (40), by means of one of its said side legs (e.g. 42), is secured to said holding strip (22) as extending vertically in relation to the interior side of said cabinet door (20).

4. A switch cabinet as claimed in claim 2,
characterized in
that said bearing block (40), by means of its center web (41), is secured to a holding flap (23) which is angled off on said holding strip (22) to extend parallel in relation to the interior side of said cabinet door (20).

5. A switch cabinet as claimed in claims 3 or 4, characterized in that a bearing plate (46) is turned up on said center web (41) of said bearing block (40).

6. A switch cabinet as claimed in any one of claims 1 to 5, characterized in that said guide bolt (60) is enlarged on its free, lower side by being provided with a stop collar (65) whose diameter is larger than the diameter of said catch receptable (54) of said scissor-arm type lever (50)

7. A switch cabinet as claimed in any one of claims 1 to 6, characterized in that said guide bolt (60), by means of its upper end which is designed as a threaded stud (1), is capable of being screwed into a taphole (57) which is provided for in a mounting bracket (55), and that said mounting bracket (55) is capable of being secured to the vertical edge (11) terminating the front side of said switch cabinet, i.e. by means of a screw (58).

8. A switch cabinet as claimed in any one of claims 1 to 7, characterized in that said scissor-arm type lever (50) is pivotally mounted to said bearing plate (46) of said bearing block (40) by means of a hinged joint consisting of a screw (52) and of a nut (53).

9. A switch cabinet as claimed in any one of claims 1 to 8, characterized in that said guiding portion (62) on said guide bolt (60) changes over into said arresting portion (64) via a conically widening intermediate portion (63).

10. A switch cabinet as claimed in any one of claims 1 to 9, characterized in

that the axial length of said guiding portion (62) together with the axial length of said arresting portion (64) on said guide bolt (60) is at least equal to the thickness of the material of said scissor-arm type lever (50).

11. A switch cabinet as claimed in any one of claims 1 to 10, characterized in that both said bearing block (40) and said guide bolt (60) are in such a way secured to said cabinet door (20) or said cabinet corpus (10) that said scissor-arm type lever (50) will come to lie within the clear opening of said switch cabinet as restricted by the edge (12) of the closing frame.

12. A switch cabinet as claimed in any one of claims 1 to 11, characterized in that said bearing block (40) is mounted in the part of the upper corner on the hinge side of said cabinet door (20), and that said guide bolt (60) is arranged at a predetermined distance from the hinge side of said cabinet corpus (10), on the upper edge (11, closing-frame edge 12) thereof by projecting into the interior space of said cabinet corpus (10).

13. A switch cabinet as claimed in any one of claims 1 to 12, characterized in that said cabinet door (20), with the said of hinges (26 to 29), is fastened to said cabinet corpus (10) by permitting the said door to have an angle of opening exceeding 120°.

14. A switch cabinet as claimed in claim 1, characterized in that in the case of a cabinet corpus (10) having a locking strip projecting on the edge (11) of the front side, said guide bolt (60) for guiding said scissor-arm type lever (50) is arranged in front of said edge (11) and on the outside of said locking strip, and is secured either to said edge (11) or to the horizontal leg of the sealing strip.

Fig.1

Fig.2